# EUROPÄISCHE PATENTANMELDUNG

(11) **EP 1 440 922 A2**
(43) Veröffentlichungstag der Anmeldung: **28.07.2004**
(21) Anmeldenummer: 03024693.8
(22) Anmeldetag: 09.01.2003
(51) Int. Cl.: B65G 49/06, C03B 33/03

(54) **Verfahren und Vorrichtung zum Bewegen und Positionieren von Glastafeln**

(30) Priorität: 04.10.2002 EP 02450224
(62) Teilanmeldung aus: 03702174.8
(71) Anmelder: Tecnopat AG, 9008 St. Gallen (CH)
(72) Erfinder: Lisec, Peter, 3363 Amstetten-Hausmening (AT)
(74) Vertreter: Beer, Manfred, Dipl.-Ing.

(57) **Zusammenfassung**

Bei einer Anlage zum Zerteilen von Glastafeln in Glastafel-Zuschnitte ist wenigstens eine Trennstelle (A, B) vorgesehen. Um eine zu teilende Glastafel oder einen Glastafel-Zuschnitt in eine definierte Lage auszurichten, sind am Rand der Auflageflächen (I, II) Anlagekanten (21, 44, 45) vorgesehen. Um Glastafeln und Glastafel-Zuschnitte entlang Anlagekanten (21, 44, 45) zu bewegen, werden an den Anlagekanten (21, 45) anliegende Glastafeln bzw. Glastafel-Zuschnitte mit im Bereich der Anlagekanten (21, 45) vorgesehenen Förderbändern (20) kraftschlüssig gekuppelt und dann beispielsweise zu Trennstellen (A, B) bewegt.

## Beschreibung

Die Erfindung betrifft ein Verfahren und eine Vorrichtung zum Bewegen und Positionieren von Glastafeln im Zusammenhang mit dem Zerteilen von Glastafeln (Glasschneiden). Die hier in Betracht gezogenen Glastafeln sind beispielsweise Tafelglas (Float-Glas) und Verbundglas.

Die bekannten Vorrichtungen zum Teilen von Glastafeln ("Glasschneidetische"), wie sie beispielsweise aus der EP 0 564 758 A bekannt sind, besitzen zum Bewegen und Positionieren der Glastafeln Förderbänder und/oder Förderrollen, die in die Auflageflächen des Glasschneidetisches eingelassen sind und die über die Auflagefläche angehoben werden, wenn eine Glastafel zu transportieren ist.

Solche Förderbänder sind auch bei Vorrichtungen zum Teilen von Verbundglas (WO 95/16640 A = EP 0 708 741 A) bekannt.

Zum Bewegen von Glastafeln auf Glasschneidetischen ist es weiters bekannt, an der Schneidbrücke Mitnehmer für die Glastafeln vorzusehen. Bekannt sind an der Schneidbrücke befestigte Sauger (EP 0 192 290 A) oder am Rand einer Glastafel anlegbare Mitnehmer (US-A-5,944,244).

Glastafeln müssen auf Glasschneidetischen nicht nur genau, sondern auch rasch positioniert werden. Dies ist mit den bekannten Vorrichtungen nicht oder nur mit beträchtlichem Aufwand möglich. Dabei ist zu bedenken, dass Glastafeln mit einem Gewicht bis zu 1000 kg (Verbundglas) zu bewegen und genau zu positionieren sind. Des weiteren ist zu berücksichtigen, dass Glastafeln auf Glasschneidetischen in unterschiedliche Richtungen bewegt werden müssen, beispielsweise um X- und Y-Schnitte auszuführen.

Der Erfindung liegt die Aufgabe zu Grunde, ein Verfahren und eine Vorrichtung der eingangs genannten Gattung anzugeben, die ein genaues, rasches und einfaches Bewegen von Glastafeln (Tafelglas und Verbundglas) beim Positionieren derselben erlauben und die ohne aufwändige Fördermittel für das Bewegen und Positionieren der zu teilenden Glastafeln oder weiter zu teilender Glastafel-Zuschnitte auskommen.

Diese Aufgabe wird erfindungsgemäß mit einem Verfahren gelöst, das die Merkmale des Anspruches 1 aufweist.

Was die Vorrichtung anlangt, wird diese Aufgabe mit einer Vorrichtung gelöst, welche die Merkmale des Vorrichtungshauptanspruches aufweist.

Bevorzugte und vorteilhafte Weiterbildungen des erfindungsgemäßen Verfahrens einerseits und der erfindungsgemäßen Vorrichtung anderseits sind Gegenstand der Unteransprüche.

Bei dem erfindungsgemäßen Verfahren wird so gearbeitet, dass die Auflagefläche, auf der die zu bewegende Glastafel liegt, so schräg gestellt (geneigt) ist oder wird, dass sie in Richtung auf eine definierte Referenzlinie (Anlagekante) hin abfällt, und die auf ihr liegende Glastafel bis zu dieser Referenzlinie (Anlagekante) gleitet. Die Glastafel oder ein Glastafel-Zuschnitt sind dann durch Anliegen an der wenigstens einen Referenzlinie (Anlagekante) positioniert.

Durch Wahl des Winkels der Neigung der Auflagefläche und/oder durch Wahl des Reibungskoeffizienten zwischen Glastafel und Oberfläche der Auflagefläche kann unterschiedlich großen und schweren Glastafeln Rechnung getragen werden.

In einer bevorzugten Ausführungsform gleiten die Glastafeln auf einem zwischen der Auflagefläche und der Glastafel gebildeten Luftkissen. Ein Luftkissen als Gleitfläche für Glastafeln hat auch den Vorteil, dass man die Reibung zwischen Glastafel und Auflagefläche durch Einstellen des Drucks, mit dem Luft aus den Luftkissenöffnungen in der Auflagefläche ausströmt, auf den jeweils gewünschten Wert einstellen und bei Bedarf während der Bewegung einer Glastafel ändern kann. Dies bietet z.B. die Möglichkeit, am Beginn einer Bewegung der Glastafel die Reibung zu verringern und die Reibung vor dem Ende der Bewegung der Glastafel, beispielsweise wenn sie sich der Referenzlinie (Anlagekante) annähert, durch Absenken des Drucks der das Luftkissen bildenden Luft zu erhöhen.

Bei der erfindungsgemäßen Verfahrensweise wird in einer Ausführungsform so gearbeitet, dass eine an wenigstens einer eine Referenzlinie bildenden Anlagekante anliegende Glastafel durch kraftschlüssiges Kuppeln der Glastafel mit einem Fördermittel um definierte Strecken bewegt wird, um sie definiert einer Trennstelle zuzuführen, an der die Glastafel geschnitten (geritzt) wird.

Das erfindungsgemäße Verfahren erlaubt es auch, geteilte Glastafeln, insbesondere Teile von Glastafeln, die nach dem Schnitt der Traveren (X-Schnitte) erhalten werden, weiter zu bewegen und zu positionieren und der nächsten Trennstelle, in der Y-Schnitte ausgeführt werden, genau positioniert zuzuführen.

Das Positionieren von Glastafel-Zuschnitten erfolgt vorzugsweise so, dass ein Glastafel-Zuschnitt durch Schrägstellen der Auflagefläche nach der ersten Trennstelle mit einer seiner Ecken in einen Referenzpunkt bewegt wird, der beispielsweise durch zwei im Winkel von 90° zueinander stehende Anlagekanten definiert ist.

Insoweit die Vorrichtung betroffen ist, sind die Auflageflächen vor und nach den Trennvorrichtungen, also der Zuführtisch der ersten Trennvorrichtung (für X-Schnitte), der zweite Tisch, mit dem die Glastafel-Zuschnitte nach dem ersten Schnitt (X-Schnitt) zur zweiten Trennvorrichtung (für Y-Schnitte) bewegt werden, und schließlich der Auslauftisch in Richtung auf wenigstens eine Anlagekante abfallend schräggestellt oder gegebenenfalls zusätzlich kippbar ausgebildet, so dass sie unter einem Winkel zur Horizontalen ausgerichtet sind.

Des weiteren ist bei der erfindungsgemäßen Vorrichtung am Rand jedes Tisches wenigstens eine Anlagekante als Referenzlinie ausgebildet, die in der Regel zur nachgeordneten Trennstelle normal ausgerichtet ist. Diese Referenzlinie (Anlagekante) ist beispielsweise ein Förderband. Eine vom Förderband entlang der Anlagekante zu bewegende Glastafel oder ein Glastafel-Zuschnitt wird mit dem jeweiligen Förderband gekuppelt. Dieses Kuppeln erfolgt beispielsweise über wenigstens einen Kupplungs-Sauger, der auf einer Schiene parallel zum Förderband verschiebbar geführt ist, und nach dem Anlegen an die Glastafel in Richtung auf das Förderband zu belastbar ist, so dass zwischen Förderband und Glastafel ein Kraftschluss entsteht, der es erlaubt, die Glastafel mit Hilfe des Förderbandes auf der Auflagefläche gleitend zu bewegen. Ein gesonderter Antrieb für den Schlitten, der den Kupplungs-Sauger trägt, um diesen entlang der Anlagekante zu bewegen ist nicht vorgesehen.

Weitere Einzelheiten und Merkmale sowie Vorteile der Erfindung ergeben sich aus der nachstehenden Beschreibung eines bevorzugten Ausführungsbeispieles unter Bezugnahme auf die Zeichnungen, in der schematisch eine Schneidanlage (für Verbundglas) gezeigt ist.

Es zeigt:
Fig. 1 eine (Verbund-)Glasschneideanlage in Draufsicht,
Fig. 2 eine (Verbund-)Glasschneideanlage in Schrägansicht,
Fig. 3 schematisch einen Sauger zum Kuppeln einer Glastafel in einem Förderband,
Fig. 4 eine abgeänderte Ausführungsform mit einer zweiten Fördereinrichtung im Bereich vor der ersten Brennstelle, und
Fig. 5 schematisch einen Sauger an der Fördervorrichtung von Fig. 4.

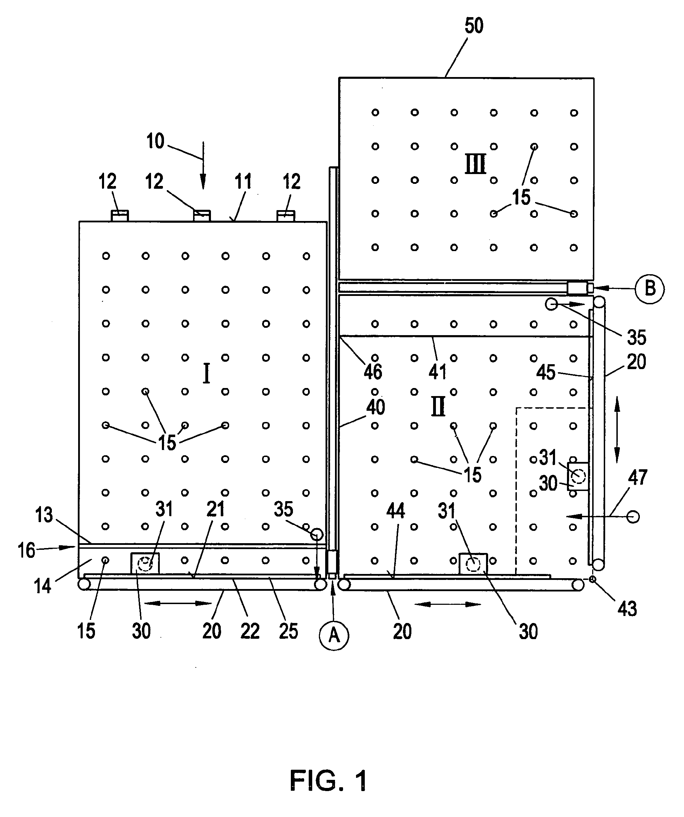

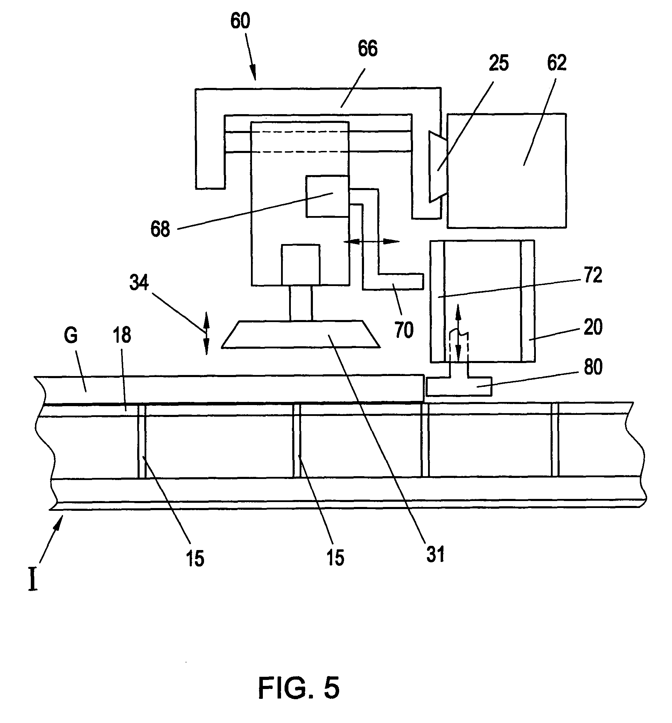

In den in den Fig. 1 bis 5 gezeigten Ausführungsformen ist die dargestellte Anlage für das Teilen von Verbundglas ausgebildet. Dies bedeutet, dass in jeder Trennstelle nicht nur Einrichtungen zum Ritzen von Verbundglas von oben und von unten her, sondern auch Einrichtungen zum Brechen von geritztem Verbundglas und zum Durchtrennen der Kunststofffolie zwischen den beiden Glasscheiben des Verbundglas vorgesehen sind.

Wenn die erfindungsgemäße Anlage als Anlage zum Teilen von normalem Glas bestimmt ist, ist in der Regel so, dass das Ritzen der Glastafel entlang der Aufteilungskontur gesondert vom in den Trennstellen A, B ausgeführten Brechen der geritzten Glastafeln in die Glaszuschnitte erfolgt, wie dies beispielsweise in der US 5 857 603 A beschrieben ist.

Die Schneidanlage für Verbundglas besitzt einen ersten Tisch I, auf den in Richtung des Pfeiles 10 Glastafeln aufgelegt werden. Der Tisch I kann auch um seine einlaufseitige Kante 11 hochklappbar sein, so dass auf ihm Glastafeln aus einem Glastafellager auf Auflagehaken 12 an diesem Rand 11 aufgestellt und dann durch Zurücklappen des Tisches I in eine im wesentlichen horizontale Ausgangs-Lage umgelegt werden können.

An dem mit den Haken 12 bestückten Rand 11 gegenüberliegenden Rand 13 schließt an den Tisch I ein ortsfester Streifen 14 an.

Der Tisch I und der ortsfeste Streifen 14 sind vorzugsweise als Luftkissentische ausgebildet, d.h. es sind über ihre Auflageflächen verteilt Öffnungen 15 vorgesehen, aus denen Druckluft ausströmt, so dass eine auf dem Tisch I liegende Glastafel auf einem Luftkissen schwimmt.

Die Auflagefläche des Tisches I kann so wie die der noch zu erläuternden Tische II und III auf der Auflagefläche des Tisches I, z.B. mit Rollen bestückt sein, so dass eine auf der Auflagefläche liegende Glastafel leicht bewegt werden kann.

Der Tisch I, genauer seine Auflagefläche ist in seiner Grundstellung (Ausgangs-Lage) zur Anlagekante 21 hin abfallend geneigt oder um den im Bereich der Stoßstelle 16 zwischen dem Tisch I und dem Streifen 14 liegenden Rand 13 kippbar, um den Tisch I so auszurichten, dass er zur Anlagekante 21 hin abfallend geneigt ist. Beispielsweise ist der mit den Haken 12 bestückte Rand 11 des Tisches I höher oder anhebbar, so dass der Tisch I in Richtung auf den Streifen 14 hin abfällt. Eine auf dem durch Kippen schräggestellten oder von vornherein geneigten Tisch I liegende Glastafel gleitet auf dem Tisch I, z.B. auf einem Luftkissen, nach "unten", bis sie an der durch ein Trum 22 eines Förderbandes 20 gebildete Anlagekante 21 anliegt. Diese Anlagekante 21, die durch das Förderband 20 gebildet wird, bildet eine Referenzlinie und definiert die Lage der Glastafel, bevor sie zur Trennstelle A (Trennvorrichtung für Glas oder Verbundglas) bewegt wird.

Wenn die Auflagefläche des Tisches I zur Anlagekante 21 in der Ausgangs-Lage hin abfallend geneigt ist, ist die Trennvorrichtung A ebenfalls geneigt und schließt mit der Horizontalen den gleichen Winkel ein wie der Tisch I (sie steigt von der Anlagekante 21 weg an).

Für eine sichere Bewegung von Glastafeln auf Tisch I (und den weiteren Tischen II und III) genügen - insbesondere bei Luftkissentischen - kleine Winkel. So kann beispielsweise der Rand 11 des Tisches I bei einer Tischlänge von 3-5 m um etwa 2 cm höher sein als der Rand 13.

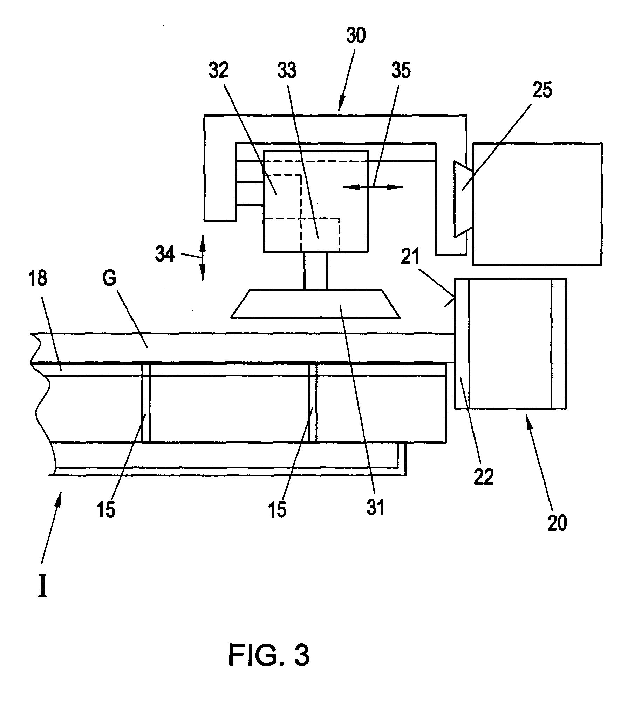

Um die Glastafel G auf dem Tisch I in Richtung auf die Trennstelle A zu bewegen (vgl. Fig. 3), ist auf einer parallel zum Förderband 20 ausgerichteten, gestellfesten Führungsschiene 25 wenigstens ein Schlitten 30 frei verschiebbar geführt, an dem wenigstens ein Sauger 31 angeordnet ist. Der Sauger 31 ist zum Anlegen an die Glastafel G, die auf der beispielsweise von einer Filzlage 18 gebildeten Auflagefläche des Tisches I liegt, durch einen im Schlitten 30 eingebauten Druckmittelmotor 33 absenkbar (Pfeil 34, Fig.3) und kann dann mit Hilfe eines weiteren (Pfeil 35, Fig.3) im Schlitten 30 eingebauten Druckmittelmotors 32 so belastet werden, dass er die Glastafel G gegen das die Anlagekante 21 (Referenzlinie) bildende Trum 22 des Förderbandes 20 zieht, wodurch die Glastafel G durch Kraftschluss mit dem Förderband 20 gekuppelt wird. Durch Bewegen des Förderbandes 20 kann die Glastafel G auf dem Tisch I bewegt werden, wobei die Reibung durch das Luftkissen des Tisches I klein gehalten wird.

Knapp vor der Trennstelle A ist am Tisch I eine Vorrichtung 35 vorgesehen, welche die vordere Kante einer zu bewegenden Glastafel erfasst, um eine Referenzlage zu definieren. Anstelle dieser Vorrichtung kann auch ein einfacher Anschlag vorgesehen sein, der nach dem Festlegen der Referenzlage wegbewegt, z.B. abgesenkt, wird.

Durch Bewegen des Förderbandes 20, mit dem die Glastafel über den Schlitten 30 mit Sauger 31 gekuppelt ist (ein gesonderter Antrieb für den Schlitten 30 kann zwar vorgesehen sein, ist aber in der Regel entbehrlich), wird die Glastafel schrittweise zur Trennstelle A bewegt und es werden in der Glastafel die X-Schnitte (Traveren) ausgeführt. Das Ausmaß des Vorschubes der Glastafel G zur Trennstelle A wird mit einem mit dem Förderband 20, insbesondere mit dessen Antrieb, gekuppelten Weggeber (Inkrementalgeber) erfasst und aufgrund der so erfassten Wege der Glastafel diese gegenüber der Trennstelle A so ausgerichtet, dass sie an der gewünschten Stelle geteilt wird. Bevor mit dem Verschieben der Glastafel G begonnen wird, wird der Tisch I in seine zur Ausrichtung der Trennstelle A parallele Lage bewegt (gekippt).

Die so erhaltenen Glasstreifen (Glas-Zuschnitte) gelangen auf den Tisch II. Dieser Tisch II ist in seiner Grund-Stellung, die er beim Ausführen von Trennvorgängen in der Trennstelle A einnimmt in einer Ebene mit dem Tisch I ausgerichtet, d.h. er ist zur Horizontalen um den selben Winkel geneigt wie der Tisch I und die Trennvorrichtung der Trennstelle A, wobei er zu seiner Anlagekante 44 hin abfällt. Diese Ausrichtung des Tisches II kann auch durch Anheben im Bereich seines der Trennstelle A benachbarten Randes 40 herbeigeführt werden.

Zum Fördern eines Glastafel-Zuschnittes von der Trennstelle A weg ist der Tisch II nach jedem in der Trennstelle A ausgeführten Trennvorgang so schrägstellbar, dass ein Glastafel-Zuschnitt auf dem Tisch II, der jetzt auch von der Trennstelle A bzw. seinem Rand 40 weg abfallend ausgerichtet ist, aus der zunächst unmittelbar rechts neben der Trennstelle A angeordneten Lage in die in der Zeichnung strichliert gezeigte Lage gleitet. Hiezu wird der Tisch II im Bereich der neben der Trennstelle A liegenden Kante 40 gehoben.

Zusätzlich kann der Tisch II auch im Bereich seiner Kante 41 angehoben werden, so dass ein Glastafel-Zuschnitt auf dem Tisch II sicher in Anlage an beiden Anlagekanten 44,45, die beide Trume von Förderbändern 20 sind, gleitet. So wird die eine Ecke des Glastafel-Zuschnittes in einem Referenzpunkt 43, im Beispiel dem Schnittpunkt der beiden Anlagekanten 44,45, angeordnet. Zu diesem Zeitpunkt ist die den Referenzpunkt 43 bildende Ecke der tiefste Punkt des Tisches II, da (im Ergebnis) die Ecke 46 des Tisches II angehoben worden ist.

Durch einen Endschalter 47 wird festgestellt, dass ein Glastafel-Zuschnitt an der Referenzkante 45 anliegt. Sobald das festgestellt ist, wird die der Trennstelle A benachbarte Kante 40 und auch die hiezu normal stehende Kante 41 des Tisches II abgesenkt, so dass der Tisch II wieder mit dem Tisch I fluchtend (in einer Ebene liegend) ausgerichtet ist.

Im gezeigten Ausführungsbeispiel sind an beiden Anlagekanten 44,45, des Tisches II Förderbänder 20 vorgesehen, denen Sauger 31 auf Schlitten 30 (vgl. Fig. 3) zugeordnet sind, wie sie zuvor für den Tisch I beschrieben worden sind. Wesentlich ist dabei der Sauger 31 an der zur Trennstelle A parallelen, dieser gegenüberliegenden (entfernten) und zur Trennstelle B normal stehenden Anlagekante 45 des Tisches II, da über diesen Schlitten 30 mit wenigstens einem Sauger 31 und dem zugeordneten Förderband 20 eine Glastafel/ein Glastafel-Zuschnitt schrittweise zur Trennstelle B (zweite Trennvorrichtung) transportiert wird, um die Trennvorgänge in Y-Richtung auszuführen. Auch vor der Trennstelle B kann ein Sensor 35 zum Erfassen der vorderen Kante eines Glastafel-Zuschnittes vorgesehen sein.

Das Förderband 20 an der zur Trennstelle A senkrechten Anlagekante 44 des Tisches II hat im wesentlichen die Aufgabe, die Bewegung eines Glastafel-Zuschnittes in den Referenzpunkt 43 zu unterstützen, insbesondere wenn sich ein Glastafel-Zuschnitt schrägstellen, und mit einer oder zwei Ecken an einem oder beiden die Anlagekanten 44,45 bildenden Förderbändern 20 anliegen sollte. Der in dem Ausführungsbeispiel von Fig. 1 an der Anlagekante 41 vorgesehene Schlitten 30 mit Sauger 31 ist nicht unbedingt erforderlich und wird in der Regel nicht vorgesehen sein.

Der nach der Trennstelle B angeordnete Tisch III, fluchtet mit dem Tisch II und ist zunächst von der Schneidstelle B weg ansteigend schräg gestellt. Wesentlich ist, dass die Tische II und III in einer (einzigen) (beispielsweise schrägen) Ebene liegen. Um den Abtransport der nach dem Teilen durch die Trennstelle B erhaltenen Glastafel-Zuschnitte zu erleichtern, kann der Tisch III nach dem Ausführen eines Trennvorganges im Bereich seiner Kante 50 abgesenkt werden. In dem Tisch III können auch Hebeleisten 55 zum Hochkippen von Glastafel-Zuschnitten eingelassen sein.

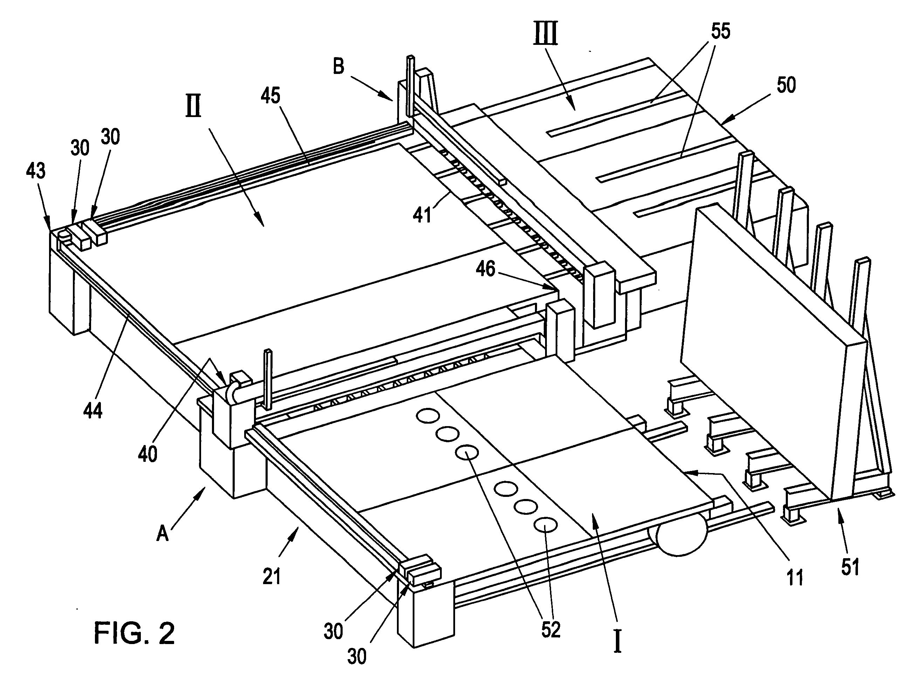

Im in Fig. 1 gezeigten Ausführungsbeispiel ist an jeder der Anlagekanten 21 und 45 je Schlitten 30 mit wenigstens einem Sauger 31 (an den Schlitten 30 können auch je zwei Sauger 31 vorgesehen sein) vorgesehen. Es ist darauf hinzuweisen, dass dies ein Minimalerfordernis ist, da an der Anlagekante 21 und/oder der Anlagekante 45 auch zwei oder mehr Schlitten 30 mit je wenigstens einem Sauger 31 vorgesehen sein können, um große und/oder schwere Glastafeln sicher zu bewegen (vgl. Fig. 2). Meist genügt aber ein Schlitten 30 je Anlagekante, insbesondere wenn dieser im Mittelbereich der Glastafel angreift und diese mit hinreichend großer Kraft gegen das die Anlagekante 21, 44, 45 (Referenzlinie) bildende Trum 22 des jeweiligen Förderbandes 20 zieht. Wenn beispielsweise zwei Schlitten 30 (Fig. 2) mit je wenigstens einem Sauger 31 an den Anlagekanten 21 und 45 vorgesehen sind, können diese auch abwechselnd an Glastafeln bzw. an Glastafel-Zuschnitten angreifen.

Um die Schlitten 30 in ihre Ausgangslage zurückzubewegen, wird das jeweilige Förderband 20 umgesteuert, d.h. es läuft in die entgegengesetzte Richtung und der Schlitten 30 wird über einen Mitnehmer mit dem Förderband 20 gekuppelt, indem der Mitnehmer gegen das Förderband 20 gedrückt wird.

Das Bewegen der Tische, insbesondere der Tische II und III erfolgt bevorzugt durch Bewegen ihrer Rahmen, die unterhalb ihrer Auflageflächen angeordnet sind, indem an den Rahmen am Boden abgestützte Druckmittelzylinder angreifen.

Der Arbeitsablauf der (Verbund-)Glasschneideanlage mit den schrägstellbaren oder in ihrer Ausgangslage schräggestellten Tischen kann beispielhaft und mit Bezug auf die Fig. 2 wie folgt beschrieben werden:
1. Tisch I wird um seinen Rand 11 hochgeklappt, um eine Glastafel aus einem Stapel 51 von Glastafeln zu übernehmen. Die Glastafel wird am Tisch I über mehrere Sauger 52 festgelegt.
2. Der Tisch I wird in die zur Anlagekante 21 hin abfallende Ausgangs-Lage zurückgeklappt. Die Glastafel gleitet dann auf dem Luftkissen zur Anlagekante 21 hin.
3. In dieser Position wird die Glastafel durch den Sauger 31 am Schlitten 30 (oder durch Sauger an zwei Schlitten) kraftschlüssig mit dem Förderband 20 gekuppelt.
4. Durch Betätigen des Förderbandes 20 wird die Glastafel vorgeschoben bis sie relativ zur Trennvorrichtung A für einen Trennvorgang richtig ausgerichtet ist.
5. Dann wird bei miteinander fluchtenden Tischen I und II (beide sind zur Anlagekante 21 bzw. 44 hin abfallend geneigt) durch die Trennvorrichtung der Trennstelle A ein Glastafel-Zuschnitt abgetrennt. Der so erhaltene Glastafel-Zuschnitt ("Travere") liegt auf dem Tisch II.
6. Tisch II wird im Bereich seiner der Trennstelle A benachbarten Kante 40 angehoben, so dass er auch auf die Anlagekante 45 hin schräg abfällt.
7. Der Glastafel-Zuschnitt bewegt sich (gleitet) auf dem Tisch II in eine Position, in der er an der Anlagekante 45 und an der Anlagekante 44 anliegt.
8. Durch Anheben des Tisches II auch im Bereich seiner der Trennstelle B benachbarten Kante 41 wird der Tisch II so schräggestellt, dass seine Ecke zwischen den Anlagekanten 44, 45 der tiefste Punkt ist. Dadurch wird sichergestellt, dass der Glastafel-Zuschnitt mit seiner Ecke im Referenzpunkt 43 angeordnet ist, und mit zwei zu einer seiner Ecken hin verlaufenden Rändern an den Anlagekanten 44, 45 anliegt.
9. Beim Bewegen eines Glastafel-Zuschnittes auf dem Tisch II wird das Förderband 20 betätigt, um diese Bewegung zu unterstützen, insbesondere bei schräggestelltem Glastafel-Zuschnitt.
10. Durch den Sauger 31 am Schlitten 30 im Bereich der Anlagekante 45 wird der Glastafel-Zuschnitt am Förderband 20 im Bereich der Anlagekante 45 kraftschlüssig festgelegt, während er sich mit seiner Ecke im Referenzpunkt 43 befindet.
11. Der Tisch II wird in seine mit Tisch I fluchtende nur zur Anlagekante 44 hin abfallende Ausgangs-Lage zurückbewegt. Der Tisch II steigt in dieser Lage von der Anlagekante 44 zum Rand 41 hin also zur Trennstelle B hin an.
12. Durch Betätigen des Förderbandes 20 wird der Glastafel-Zuschnitt zur Trennstelle B vorgeschoben.
13. Durch die Trennvorrichtung in der Trennstelle B wird der Glastafel-Zuschnitt weiter in Zuschnitte geteilt.
14. Während dieses Trennvorganges sind die Tische II und III in einer Ebene von der Anlagekante 44 des Tisches II zur Kante 50 des Tisches III hin ansteigend ausgerichtet.
15. Zum Abtransport von nach der Trennstelle B anfallenden Zuschnitten kann der Tisch III so geneigt werden , dass er von der Trennstelle B zum Rand 50 hin abfallend ausgerichtet ist. Mit Hilfe von Hebeleisten 55 können Glastafel-Zuschnitte vom Tisch III abgehoben und im wesentlichen lotrecht aufgerichtet werden.

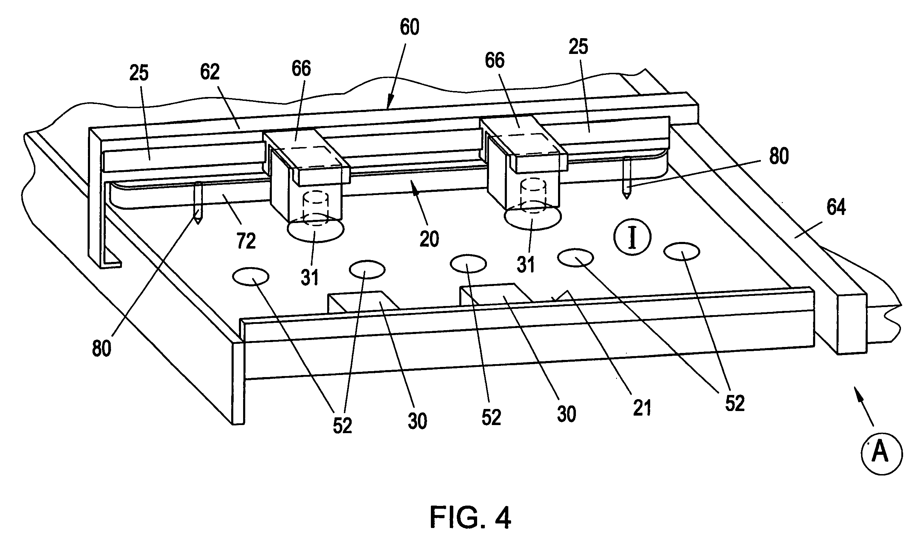

Bei der in Fig. 4 gezeigten Ausführungsform ist im Bereich der Auflagefläche des Tisches I eine weitere Fördervorrichtung 60 vorgesehen. Diese weitere Fördervorrichtung 60 kann dazu benutzt werden, um in Kombination mit der Fördervorrichtung mit dem Förderband 20 und dem Sauger 30 an der Anlagekante 21 eine Glastafel zur ersten Trennstelle A hinzubewegen. Die zweite Fördereinrichtung 60 kann aber auch dazu herangezogen werden, gleichzeitig oder unabhängig vom Transportieren einer Glastafel durch die Fördervorrichtung 20 mit Sauger 30 eine weitere Glastafel zur Trennstelle A hinzubewegen.

Im einzelnen ist die zweite Fördereinrichtung 60 im Bereich über der Auflagefläche des Tisches I wie folgt aufgebaut: An einem am Tisch I ortsfest montierten Balken 62 ist ein endlos umlaufendes Förderband 20 z.B. in Form eines Zahnriemens, mit Abstand über der Auflagefläche des Tisches I vorgesehen, dessen Anlagefläche 21 zur Auflagefläche I im wesentlichen normal ausgerichtet ist. Oberhalb des Förderbandes 20 ist an dem Balken 62, der einerseits am Tisch I und anderseits am Balken 64 der Trennstelle A montiert sein kann, eine Führungsschiene 25 für (wenigstens) einen Schlitten 66 vorgesehen. Dieser Schlitten 66 trägt wenigstens einen Sauger 31, der auf eine auf der Auflagefläche des Tisches I liegende Glastafel G abgesenkt (Pfeil 34) werden kann. Dabei ist die Anordnung des Förderbandes 20 so getroffen, dass dieses von der Auflagefläche des Tisches I einen Abstand aufweist, der so groß ist, dass auch die dickste Glastafel G unter ihm hindurchbewegt werden kann.

Um den Schlitten 66 mit dem Sauger 31 mit dem Förderband 20 zu kuppeln, ist an dem Schlitten 66 ein Druckmittelmotor 68 vorgesehen, der einen Stempel 70 gegen das Trum 72 des Förderbandes 20 drückt, das dem Schlitten 66 benachbart ist, so dass der Schlitten mit dem Förderband bewegt und damit auch eine Glastafel G, an die der Sauger 31 des Schlittens 66 angelegt worden ist, mitgezogen wird.

Um eine Glastafel G parallel zur Bewegungsrichtung des Förderbandes 20 auszurichten, können absenkbare Anschläge 80, z.B. Anlagestifte, vorgesehen sein, die eine "Null-Linie" (Referenz-Linie) definieren und gegen welche die Glastafel G in Anlage gebracht wird.

Es versteht sich, dass anstelle des einen Schlittens 66 mit wenigstens einem Sauger 31 auch zwei oder mehrere Schlitten 66 jeweils mit wenigstens einem Sauger 31 vorgesehen sein können, um den sicheren Transport von Glastafeln G durch die zusätzliche Fördervorrichtung 60 im Bereich der Auflagefläche des Tisches I zu ermöglichen.

In einer abgeänderten Ausführungsform kann die Fördervorrichtung 60 statt ortsfest verstellbar sein, so dass ihr Abstand von der vom Förderband 20 gebildeten Anlagekante 21 verändert werden kann.

Zusammenfassend kann ein Ausführungsbeispiel der Erfindung wie folgt beschrieben werden:

Bei einer Anlage zum Zerteilen von Glastafeln in Glastafel-Zuschnitte ist wenigstens eine Trennstelle A, B vorgesehen. Um eine zu teilende Glastafel oder einen Glastafel-Zuschnitt in eine definierte Lage auszurichten, sind am Rand der Auflageflächen I, II Anlagekanten 21, 44, 45 vorgesehen. Um Glastafeln und Glastafel-Zuschnitte entlang Anlagekanten 21, 44, 45 zu bewegen, werden an den Anlagekanten 21, 45 anliegende Glastafeln bzw. Glastafel-Zuschnitte mit im Bereich der Anlagekanten 21, 45 vorgesehenen Förderbändern 20 kraftschlüssig gekuppelt und dann beispielsweise zu Trennstellen A, B bewegt.

## Patentansprüche

1. Verfahren zum Bewegen von Glastafeln (G) und Glastafel-Zuschnitten beim Teilen von Glastafeln (G) auf einer Vorrichtung zum Teilen von Glastafeln (G) mit wenigstens einer Trennstelle (A, B) und mit beidseits der Trennstelle (A, B) angeordneten Auflageflächen (I, II, III) für die zu teilende Glastafel (G) und für nach dem Teilen derselben erhaltene Glastafel-Zuschnitte, **dadurch gekennzeichnet, dass** eine auf einer Auflagefläche (I, II) liegende Glastafel bzw. ein Glastafel-Zuschnitt im Bereich eines an einer Anlagekante (21, 45) anliegenden Randes erfasst und relativ zur Trennstelle (A, B) bewegt wird.

2. Verfahren nach Anspruch 1, **dadurch gekennzeichnet, dass** die Glastafel (G) auf einer horizontalen oder im wesentlichen horizontalen Auflagefläche (I, II) bewegt wird.

3. Verfahren nach Anspruch 1 oder 2, **dadurch gekennzeichnet, dass** die Glastafel (G) schrittweise zur Trennstelle (A, B) bewegt und nach jedem Vorschubschritt ein Trennvorgang ausgeführt wird.

4. Verfahren nach einem der Ansprüche 1 bis 3, **dadurch gekennzeichnet, dass** die Glastafel (G) mit ihrem an der Anlagekante (21, 45) anliegenden Rand kraftschlüssig mit einer Fördereinrichtung (20) gekuppelt wird.

5. Verfahren nach Anspruch 4, **dadurch gekennzeichnet, dass** die Glastafel (G) von der Fördereinrichtung (20) in einer zur Wirkrichtung der Trennstelle (A, B) normalen Richtung bewegt wird.

6. Verfahren nach einem der Ansprüche 1 bis 5, **dadurch gekennzeichnet, dass** eine Referenzlage einer Glastafel oder eines Glastafel-Zuschnittes derselben/desselben an zwei zueinander senkrecht stehenden Anlagekanten (44, 45) definiert wird.

7. Verfahren nach Anspruch 6, **dadurch gekennzeichnet, dass** die Ecke des Glastafel-Zuschnitts, die an dem von der ersten Trennstelle (A) entfernt liegenden Rand des Glastafel-Zuschnittes angeordnet ist, im Schnittpunkt (43) der Anlagenkanten (44,45) angeordnet wird.

8. Verfahren nach einem der Ansprüche 1 bis 7, **dadurch gekennzeichnet, dass** zwischen der Auflagefläche (I, II, III) und einer Glastafel (G) und einem Glastafel-Zuschnitt ein Luftkissen ausgebildet wird.

9. Vorrichtung zum Durchführen des Verfahrens nach einem der Ansprüche 1 bis 8 mit wenigstens einer Trennvorrichtung (A, B), mit wenigstens einer als Tisch ausgebildeten Auflagefläche (I, II, III) und mit wenigstens einer Einrichtung zum Fördern von Glastafeln (G) oder einem Glastafel-Zuschnitt auf dem Tisch (I, II, III), **dadurch gekennzeichnet, dass** im Bereich einer Anlagekante (21, 45) für Glastafeln oder Glastafel-Zuschnitte eine Fördereinrichtung (20) für Glastafeln (G) oder Glastafel-Zuschnitte vorgesehen ist.

10. Vorrichtung nach Anspruch 9, **dadurch gekennzeichnet, dass** die Fördereinrichtung ein Endlosförderband (20) umfasst.

11. Vorrichtung nach Anspruch 10, **dadurch gekennzeichnet, dass** ein Trum (22) des Förderbandes (20) die Anlagekante (21, 44, 45) bildet.

12. Vorrichtung nach einem der Ansprüche 9 bis 11, **dadurch gekennzeichnet, dass** die mit der Fördereinrichtung (20) ausgestattete Anlagekante (21, 45) zur dem Tisch (I, II) benachbarten Trennvorrichtung (A, B) normal ausgerichtet ist.

13. Vorrichtung nach einem der Ansprüche 9 bis 12, **dadurch gekennzeichnet, dass** eine Vorrichtung (30, 31) zum kraftschlüssigen Kuppeln einer Glastafel (B) oder eines Glastafel-Zuschnittes mit der Fördereinrichtung (20) vorgesehen ist.

14. Vorrichtung nach Anspruch 13, **dadurch gekennzeichnet, dass** die Vorrichtung zum kraftschlüssigen Kuppeln wenigstens einen an der nach oben weisenden Fläche einer Glastafel (G) oder eines Glastafel-Zuschnittes angreifenden Mitnehmer (31) aufweist, mit dem die Glastafel (G) oder der Glastafel-Zuschnitt gegen das die Anlagekante (21, 45) bildende Trum (22) des Förderbandes (20) hin belastbar ist.

15. Vorrichtung nach Anspruch 14, **dadurch gekennzeichnet, dass** der Mitnehmer wenigstens ein Sauger (31) ist.

16. Vorrichtung nach Anspruch 14 oder 15, **dadurch gekennzeichnet, dass** der Mitnehmer (31) über einen Schlitten (30) auf einer zum Förderband (20) parallel ausgerichteten Führungsschiene (25) geführt ist.

17. Vorrichtung nach Anspruch 16, **dadurch gekennzeichnet, dass** der wenigstens eine Sauger (31) im Schlitten (30) durch Druckmittelmotore (32, 33) heb- und senkbar und horizontal verstellbar montiert ist.

18. Vorrichtung nach einem der Ansprüche 9 bis 17, **dadurch gekennzeichnet, dass** der zwischen den beiden Trennvorrichtungen (A, B) angeordnete Tisch (II) mit zwei Anlagekanten (44, 45) ausgebildet ist, wobei diese Anlagekanten (44, 45) jeweils einer der Trennvorrichtungen (A, B) gegenüber liegen.

19. Vorrichtung nach einem der Ansprüche 9 bis 18, **dadurch gekennzeichnet, dass** die Auflagefläche der Tische (I, II, III) mit Rollen bestückt ist.

20. Vorrichtung nach einem der Ansprüche 9 bis 18, **dadurch gekennzeichnet, dass** in der Auflagefläche der Tische (I, II, III) Bohrungen (15) münden, die mit Druckluft beaufschlagbar sind.

21. Vorrichtung nach Anspruch 20, **dadurch gekennzeichnet, dass** die Auflagefläche der Tische (I, II, III) durch eine Filzauflage (18) gebildet ist.

22. Vorrichtung nach einem der Ansprüche 16 bis 21, **dadurch gekennzeichnet, dass** der Schlitten (30) für das Zurückbewegen in seine Ausgangslage über einen Mitnehmer mit dem in die entgegengesetzte Richtung laufenden Förderband (20) kuppelbar ist.

23. Vorrichtung nach einem der Ansprüche 9 bis 22, **dadurch gekennzeichnet, dass** im Bereich des ersten Tisches (I) eine Fördervorrichtung (60) vorgesehen ist, die zur Fördervorrichtung (20,30) am Rand des Tisches (I) parallel und normal zur ersten Trennstelle (A) ausgerichtet ist.

24. Vorrichtung nach Anspruch 23, **dadurch gekennzeichnet, dass** die Fördereinrichtung (60) einen Endlosriemen (20) aufweist, der im Abstand von der Auflagefläche des Tisches (I) angeordnet ist und wenigstens einen Schlitten (66) mit einer Einrichtung (31) zum Kuppeln des Schlittens (66) mit einer auf dem Tisch (I) liegenden Glastafel (G) vorgesehen ist.

25. Vorrichtung nach Anspruch 24, **dadurch gekennzeichnet, dass** die Einrichtung zum Kuppeln des Schlittens (66) mit der Glastafel (G) wenigstens ein Sauger (31) ist.

26. Vorrichtung nach Anspruch 24 oder 25, **dadurch gekennzeichnet, dass** der Schlitten (66) mit dem Transportriemen (20) kuppelbar ist.

27. Vorrichtung nach Anspruch 26, **dadurch gekennzeichnet, dass** zum Kuppeln des Schlittens (66) mit dem Transportriemen (20) am Schlitten (66) ein gegen den Transportriemen (20) anlegbaren Stempel vorgesehen ist.

28. Vorrichtung nach einem der Ansprüche 23 bis 27, **dadurch gekennzeichnet, dass** an der Fördervorrichtung (60) wenigstens ein Anschlag (80) zum Ausrichten eines Randes einer zu transportierenden Glastafel (G) vorgesehen ist, wobei die Glastafel (G) durch Anlegen an diesen Anschlag (80) ausgerichtet wird.

29. Vorrichtung nach Anspruch 28, **dadurch gekennzeichnet, dass** die Anschlagvorrichtung wenigstens zwei absenkbare Stifte (80) aufweist.

30. Vorrichtung nach einem der Ansprüche 23 bis 29, **dadurch gekennzeichnet, dass** die Fördervorrichtung (60) einen Balken (62) umfasst, der einerseits am Maschinengestell und anderseits am Balken (64) der ersten Trennvorrichtung (A) montiert ist.
